# FASCICULE DE BREVET EUROPEEN

(11) **EP 3 122 477 B1**
(45) Date de publication et mention de la délivrance du brevet: **11.04.2018**
(21) Numéro de dépôt: 15709719.7
(22) Date de dépôt: 16.02.2015
(51) Int. Cl.: B07C 1/00

(54) **DISPOSITIF D'ALIMENTATION EN ARTICLES PLATS POUR UN CARROUSEL À GODETS**
ZUFÜHREINRICHTUNG FÜR FLACHE ARTIKEL IN UMLAUFENDE AUFNAHMEBEHÄLTER
FEEDER DEVICE FOR FLAT ARTICLES TO A CONTAINER CAROUSEL

(30) Priorité: 25.03.2014 FR 1452530
(43) Date de publication de la demande: 01.02.2017
(73) Titulaire: Solystic, 92220 Bagneux (FR)
(72) Inventeur: CAMPAGNOLLE, Pierre, F-26400 Allex (FR); MOULLARD, Eric, 07500 Guilherand-Granges (FR); TETAZ, Patrick, F-38160 Saint Romans (FR); FAIVRE, Lionel, F-26000 Valence (FR)
(74) Mandataire: Prugneau, Philippe
(86) Numéro de dépôt international: PCT/FR2015/050373
(87) Numéro de publication internationale: WO 2015/145000

(56) Documents cités:
- EP-A2- 0 101 370
- DE-A1- 19 516 666
- DE-A1-102011 087 370
- FR-A1- 2 708 488

## Description

### Domaine technique

L'invention concerne un dispositif d'alimentation en articles plats pour un carrousel à godets avec des godets qui circulent en boucle dans un certain sens de circulation.

### Technique antérieure

Un tel dispositif d'alimentation en articles de courrier plats pour un convoyeur de tri à godets dans une machine de tri postal est déjà connu par exemple du document de brevet FR-2864524 ou DE-A-195 16 666. Dans cette machine de tri postal connue, les articles de courrier sont des articles de courrier mécanisables, par exemple de grand format, et chaque article est injecté dans un godet sur chant par le côté supérieur du godet.

Dans le tri postal automatique, les articles de courrier mécanisables peuvent par exemple présenter des dimensions en longueur de 140 à 380 mm, en hauteur de 90 à 260mm et en épaisseur de 0,5 à 32mm, un poids pouvant aller de 10g à 2kg. Ces articles de courrier plats mécanisables peuvent être conditionnés sous enveloppe en papier, sous enveloppe en plastique et même être conditionnés en liasse cerclée.

Le spectre du courrier postal inclut aussi des objets postaux hétérogènes comme des petits paquets ou colis dont les dimensions, le poids et le conditionnement sont très hétérogènes avec des valeurs qui peuvent aller au delà des valeurs indiquées plus haut.

### Résumé de l'invention

Le but de l'invention est donc de proposer un dispositif d'alimentation simple et fiable pour alimenter par exemple en paquets ou colis un carrousel à godets dans une machine de tri postal.

A cet effet, l'invention a pour objet un dispositif d'alimentation en articles plats pour un carrousel à godets avec des godets qui circulent en boucle dans un certain sens de circulation, caractérisé en ce qu'il comprend :
un convoyeur à plat dans lequel les articles sont déplacés en série à plat et un carrousel à plateaux avec des plateaux basculants aptes à basculer chacun entre une position horizontale et une position inclinée et qui circulent en boucle de façon synchronisée avec les godets du convoyeur à godets et dans le même sens de circulation,
en ce que le convoyeur à plat comporte une extrémité libre en pente qui est en surplomb du carrousel à plateaux pour charger les plateaux en position horizontale du carrousel avec des articles arrivant de l'extrémité libre du convoyeur à plat,
en ce que les plateaux basculants ont chacun un axe de basculement orienté transversalement à la boucle de circulation des plateaux, l'axe de basculement de chaque plateau étant disposé à l'avant du plateau selon le sens de circulation des plateaux de sorte qu'en position inclinée, chaque plateau a un côté arrière suivant le sens de circulation qui s'aligne avec la paroi intérieure d'un godet du carrousel à godets,
et en ce que les godets du carrousel à godets ont chacun une grande dimension correspondant à une grande longueur des articles plats qui est orientée transversalement à la boucle de circulation des godets de sorte que dans une portion rectiligne de circulation des plateaux du convoyeur à plateaux qui se superpose à une portion rectiligne de circulation des godets du convoyeur à godets, chaque article chargé sur un plateau est injecté dans un godet par gravité et simple glissement sur le plateau lequel se trouve incliné vers l'intérieur du godet.

Selon des particularités du dispositif d'alimentation selon l'invention :
- l'axe de basculement de chaque plateau est disposé à une distance par rapport à l'avant du plateau suivant le sens de circulation qui est comprise entre 1/5 et 1/3 de la longueur du plateau suivant ce sens de circulation, et de préférence égale à 1/4 de la longueur du plateau.
- chaque plateau a une face supérieure sur laquelle est chargé un article, qui est striée.
- l'écart angulaire entre la position horizontale et la position inclinée d'un plateau est d'environ 60°.

L'idée à la base de l'invention est donc d'injecter les petits paquets ou colis par le dessus des godets du carrousel en les faisant glisser par l'effet de la gravité sur des plateaux basculants d'un carrousel à plateaux.

Pendant le basculement en position inclinée du plateau dans le godet à charger, on a constaté que certains articles de courrier pouvaient avoir tendance à se décoller de la surface du plateau au moment où ils commencent à glisser du fait d'une différence de vitesses relatives entre l'article de courrier et le plateau. Ce décollement, en général de faible amplitude, n'aura pas d'effet sur la qualité d'injection des objets, sinon dans certains cas de décollement de grande amplitude, il est possible que l'article de courrier percute la paroi aval du godet et ne soit pas injecté.

On réduit les risques de décollement si on rapproche significativement le centre de gravité de chaque article de courrier vers l'axe de pivotement du plateau basculant.

Les objets étroits et placés en limite supérieure du plateau peuvent être projetés vers l'aval au moment de l'amortissement rapide du plateau, et rebondir ensuite hors du godet.

Si la surface supérieure des plateaux est striée ou rainurée, on peut éviter que certains articles de courrier, en particulier ceux qui sont conditionnés sous emballage en plastique, soient ralentis par un effet de ventouse dans leur glissement par gravité.

Le dispositif d'alimentation présenté ci-dessus peut faire partie d'une machine de tri postal existante comportant un carrousel à godets avec des godets ouverts sur le dessus et des sorties de tri sous le convoyeur à godets.

Un exemple de réalisation du dispositif d'alimentation en articles plats selon l'invention est décrit ci-après et illustré par les dessins.

### Présentation sommaire des dessins

La figure 1 illustre de façon très schématique en perspective une machine de tri postal avec un dispositif d'alimentation selon l'invention en objets postaux hétérogènes du type petits paquets ou colis.
La figure 2 illustre de façon schématique en perspective une partie amont d'une antenne d'alimentation automatique en objets postaux hétérogènes.
La figure 3 illustre de façon schématique en perspective une partie aval de l'antenne d'alimentation de la figure 2.
La figure 4 illustre de façon schématique selon une autre perspective la partie aval de l'antenne d'alimentation de la figure 2 avec les godets d'un convoyeur à godets.
La figure 5 illustre de façon schématique un plateau basculant en position inclinée dont la surface est parallèle à la paroi d'un godet du carrousel à godets.
La figure 6 illustre de façon schématique la surface striée d'un plateau du convoyeur à plateaux basculants.

### Description des modes de réalisation

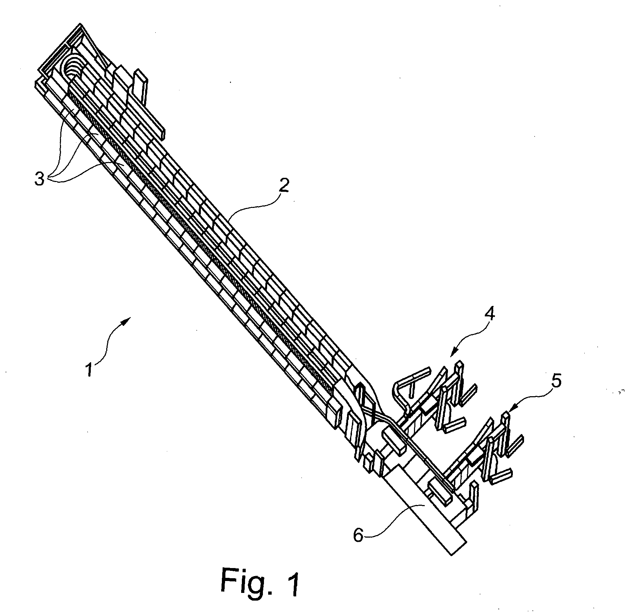

Sur la figure 1, on a illustré une machine de tri postal 1 selon l'invention vue dans son ensemble et comprenant ici dans l'exemple un convoyeur de tri du type carrousel à godets 2.

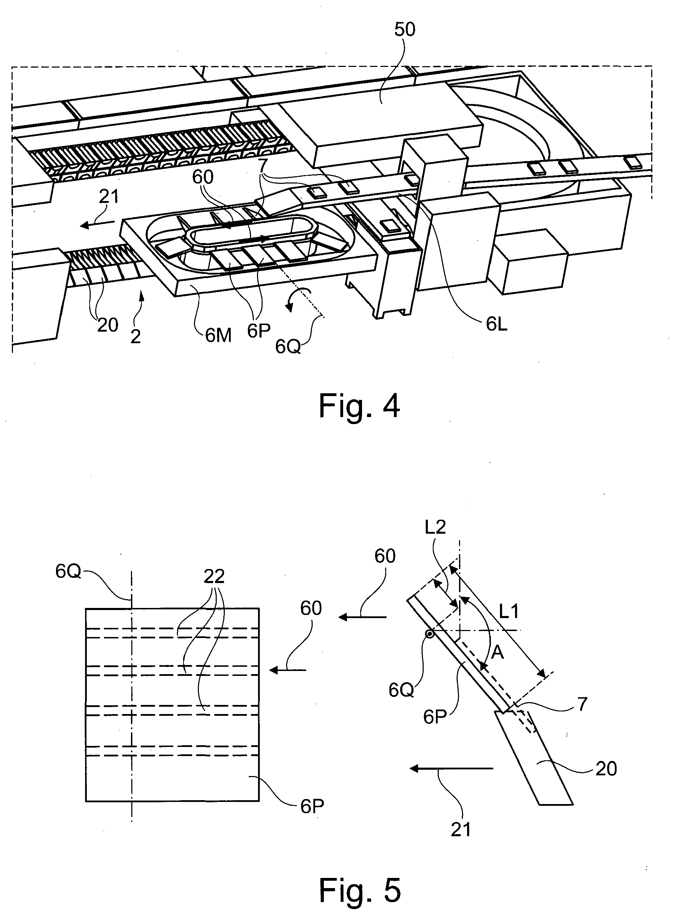

Le carrousel à godets 2 comporte des godets (non représentés sur la figure 1 mais qui sont visibles sur la figure 4) qui sont adaptés pour transporter chacun au moins un objet postal qui est ici dans le cadre de l'invention un article de courrier plat ou un petit paquet ou colis.

Les godets du carrousel 2 circulent suivant un chemin en boucle fermée au dessus de réceptacles de tri 3 qui sont ici des bacs amovibles dans lesquelles les objets triés peuvent être placés en superposition à plat.

Sur la figure 1, on a illustré schématiquement deux antennes d'alimentation 4,5 qui alimentent en parallèle le carrousel à godets 2 en articles de courrier plats homogènes de petit et/ou grand format comme cela est connu de l'Homme du métier. Ces articles de courrier plats peuvent être par exemple des lettres, des magazines ou analogues.

Sur la figure 1, la référence 6 désigne une antenne d'alimentation spécifique du carrousel à godets 2 en objets postaux hétérogènes tels que petits paquets ou colis.

La machine de tri 1 est donc apte à trier dans ses sorties de tri 3 un flux de petits paquets ou colis et un flux de courrier, c'est à dire des articles de courrier plats, ce qui permet d'optimiser les coûts du tri postal.

Le conditionnement et les caractéristiques des petits paquets étant différents de ceux du courrier, chaque flux a sa propre antenne d'alimentation et son propre point d'injection dans le carrousel à godets.

Les antennes d'alimentation 4 et 5 comportent chacune classiquement un magasin d'entrée dans lequel les articles de courrier sont disposés en pile sur chant, un dépileur en aval du magasin qui dépile et sérialise les articles de courrier plats, un convoyeur à bandes de pincement pour transporter les articles de courrier en série sur chant à écart ou pas constant devant une caméra et enfin dans un injecteur qui injecte chaque article de courrier plat verticalement dans un godet du carrousel. Chaque godet a donc un côté supérieur ouvert à travers lequel est injecté l'article de courrier.

Comme cela est connu, la caméra forme une image numérique de la face de chaque article de courrier comportant une adresse postale et plus particulièrement l'adresse postale de distribution de l'article de courrier et sur la base d'une reconnaissance par OCR de cette adresse de distribution dans l'image, une unité de contrôle de la machine détermine le réceptacle 3 dans lequel l'article de courrier doit être déposé par le carrousel à godets.

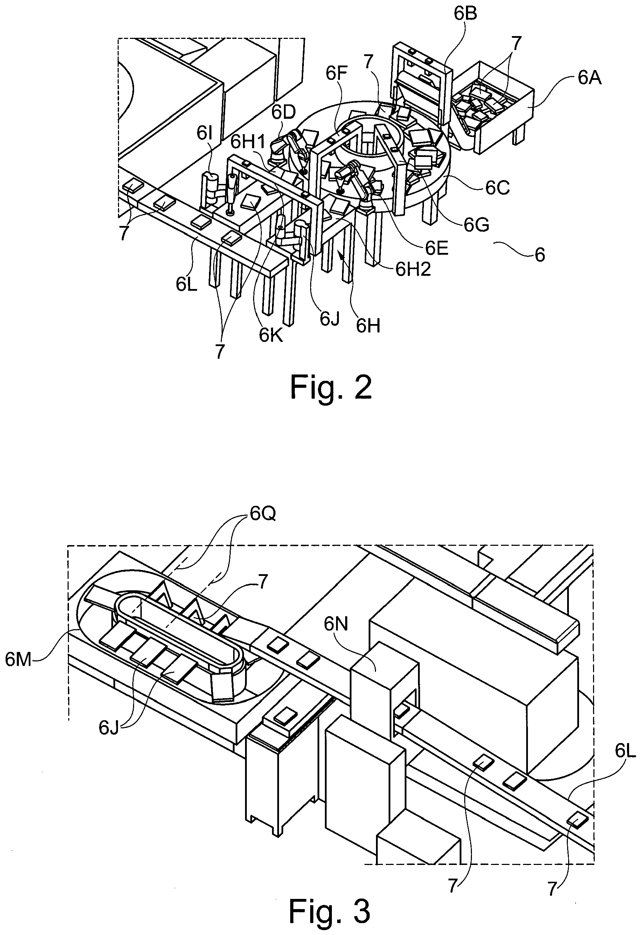

Sur la figure 2, on a illustré plus en détail maintenant l'antenne spécifique d'alimentation 6 en objets postaux hétérogènes 7 tels que des petits paquets ou colis.

Elle comporte une entrée formée ici par une sorte de trémie 6A dans laquelle les objets postaux hétérogènes 7 sont versés en vrac.

Les objets postaux hétérogènes 7 en tas dans la trémie 6A sont dévraqués mécaniquement à l'aide d'un convoyeur à tasseaux 6B qui forme la sole de la trémie 6A et qui transporte les objets postaux 7 sur une pente à l'aplomb d'un convoyeur circulaire 6C.

L'équipement 6A,6B,6C permet de faire une première séparation des objets postaux hétérogènes 7 ("dévracage").

Les objets postaux 7 qui tombent sur le convoyeur circulaire 6C sont ensuite égrenés et mis en série à l'aide d'au moins un bras de manutention robotisé de type "prélève et place" connu sous le terme anglais "pick and place".

Sur la figure 2, l'antenne d'alimentation 6 comporte de préférence un premier étage de bras de manutention robotisés, ici avec deux bras robotisés 6D,6E ayant chacun six degrés de liberté et associés respectivement aux systèmes de vision en 3D 6F,6G.

La fonction de ce premier étage de bras robotisés avec les systèmes de vision est d'égrener les objets postaux hétérogènes 7 partiellement encore entassés sur le convoyeur circulaire 6C en les prélevant un à un et en les plaçant individuellement sur une extrémité d'un convoyeur à plat 6H.

Le convoyeur circulaire 6C assure une recirculation des objets postaux 7 non prélevés par les bras robotisés 6D,6E. Chaque bras robotisé 6D,6E peut être équipé d'un système de préhension pneumatique à ventouse.

Comme visible sur la figure 2, le convoyeur à plat 6H comporte deux pistes 6H1, 6H2 qui sont servies respectivement par les bras robotisés 6D,6E qui peuvent ainsi avoir des cadences de prélèvement et de mise en place différentes.

L'antenne d'alimentation 6 comporte dans l'exemple un second étage de bras de manutention robotisés disposé à l'autre extrémité du convoyeur à plat 6H en aval des bras 6D,6E, ici avec deux autres bras de manutention robotisés 6I,6J associés à un système de vision 6K.

Les bras robotisés 6I,6J sont ici des bras robotisés à quatre degrés de liberté, avec par exemple des préhenseurs pneumatiques à ventouse, pour prélever les objets postaux à plats respectivement depuis les pistes 6H1,6H2 et pour les déposer à plat en série sur la sole d'un autre convoyeur à plat 6L qui est adjacent au convoyeur 6H ce qui permet de limiter l'emprise au sol de la machine de tri postal car le convoyeur 6L peut être dans l'alignement des sorties de tri 3 de la machine.

On a donc dans cet agencement de bras robotisés industriels disposés à poste fixe, une séparation des fonctions d'égrenage d'une part et de sérialisation d'autre part ce qui permet d'obtenir une compacité maximale pour l'unité d'alimentation 6 du fait de la flexibilité d'intégration du convoyeur à plat 6H dans des installations déjà existantes notamment.

Le deuxième étage de bras robotisés 6I, 6J peut être adapté en outre pour orienter dans le sens de la leur grande longueur (orientation mode paysage) les objets postaux hétérogènes 7 suivant la direction longitudinale du convoyeur à plat 6L. Les bras de manutention robotisés du second étage de bras robotisés peuvent alors synchroniser à pas constant les objets postaux hétérogènes sérialisés.

Sur la figure 3, on a illustré maintenant la partie aval de l'antenne d'alimentation 6 selon l'invention avec le convoyeur à plat 6L qui transporte en série à plat les objets postaux 7 vers un carrousel 6M à plateaux basculants qui sert à injecter par le dessus les objets postaux hétérogènes 7 dans les godets du carrousel à godets 2.

Comme visible sur la figure 3, un système de prise d'images 6N est disposé sur le trajet du convoyeur 6L pour former deux images numériques respectivement des deux côtés opposés de chaque objet postal hétérogène 7. A partir de ces deux images numériques, l'unité de contrôle pourra donc évaluer dans l'image retenue une adresse de distribution pour l'objet postal en question de sorte à diriger cet objet postal hétérogène dans un bac de sortie de tri correspondant.

Le carrousel à plateaux basculants 6M comporte des plateaux 6P qui sont basculants chacun autour d'un axe de rotation latéral et qui circulent sur un trajet en boucle fermée au dessus des godets du convoyeur à godets 2.

Les plateaux du carrousel 6M sont chargés chacun avec un objet postal 7. Les objets postaux 7 arrivent un à un sur les plateaux du convoyeur 6M par une extrémité libre en pente du convoyeur à plat 6L en surplomb du carrousel 6M.

Comme illustré sur la figure 3, chaque objet postal 7 est transféré par basculement d'un plateau vers un godet dans lequel il est stocké de manière globale sur chant sur son côté de plus grande longueur. Ce basculement est effectué par simple gravité une fois l'objet postal 7 chargé sur un plateau du carrousel 6M.

Sur la figure 4, on voit que le carrousel à plateaux basculants 6M comporte des plateaux 6P qui sont montés basculants chacun autour d'un axe de rotation 6Q situé sur le côté latéral avant du plateau. A la fin du mouvement de basculement vers la position inclinée, chaque plateau est remonté automatiquement en position horizontale par un système de rampe qui se trouve dans le virage du trajet en boucle des plateaux.

Les plateaux 6P circulent, de façon synchronisée avec les godets 20 du convoyeur à godets 2, sur le trajet en boucle fermée dans le sens indiqué par les flèches 60 au dessus des godets 20 du convoyeur à godets 2. Dans l'exemple, le trajet en boucle fermée du carrousel 6M a une longueur d'environ six mètres et le carrousel 6M comporte onze plateaux 6P de forme rectangulaire, par exemple de 400mm par 500 mm, qui sont déplacés à une même vitesse d'environ 1m/s que les godets 20 et dans le même sens de circulation 21 des godets.

Chaque plateau du carrousel 6M est chargé avec un objet postal hétérogène 7 disposé à plat sur le plateau en position horizontale. Les objets postaux 7 arrivent un à un sur les plateaux du convoyeur 6M par une extrémité libre en pente du convoyeur à plat 6L qui est en surplomb du carrousel à plateaux et plus particulièrement en surplomb d'une portion rectiligne de circulation des plateaux du carrousel 6M.

Comme illustré sur la figure 4, l'axe de basculement 6Q des plateaux du carrousel à plateaux est orienté transversalement à la boucle de circulation des plateaux et les godets 20 du carrousel à godets ont ici une grande dimension d'environ 400 mm (correspondant à la grande longueur des articles de courrier) qui est orientée transversalement à la boucle de circulation 21 des godets.

En position inclinée d'un angle A d'environ 60° par rapport à la verticale, comme représenté sur la figure 5, chaque plateau 6P a son côté arrière suivant le sens de circulation 60 qui plonge vers l'intérieur d'un godet 20 lequel est également incliné par rapport à la verticale et qui est en déplacement selon la direction 21. Le plateau s'aligne donc avec la paroi intérieure du godet.

De la sorte, l'objet postal 7 sur le plateau incliné 6P est transféré par gravité et simple glissement dans le godet 20 qui est en déplacement dans le même sens de circulation que le plateau et dans lequel il est stocké de manière globale sur chant sur son côté de plus grande longueur.

Sur la figure 5, on voit que l'axe de basculement 6Q est disposé à l'avant du plateau selon la direction de circulation 60 du plateau. Selon l'invention, l'axe 6Q est disposé à une distance L2 par rapport à l'avant du plateau 6P suivant le sens de circulation 60 qui est comprise entre 1/5 et 1/3 de la longueur L1 (ici environ 500mm) du plateau suivant ce sens de circulation. Des essais ont montré qu'une distance L2 égale à 1/4 de L1 est un bon compromis pour obtenir la plus grande plage de positions de dépose sur le plateau pour des objets 7 pris dans tout le spectre du courrier postal incluant les articles de courrier homogènes et les objets postaux hétérogènes.

La face supérieure des plateaux sur laquelle sont déposés les objets 7 présente un coefficient de frottement qui est choisi pour augmenter la plage de positions de dépose des objets 7 en retardant légèrement le moment de glissement des objets lors du basculement en position inclinée du plateau 6P. Par ailleurs, comme représenté sur la figure 6, la face supérieure de chaque plateau 6P présente des stries 22 parallèles qui s'étendent suivant la flèche 60 qui évitent le ralentissement par effet ventouse des objets 7 emballés sous plastique.

La face supérieure de chaque plateau est donc ondulée ce qui permet un passage d'air sous l'objet 7 placé sur le plateau. Le ratio largeur d'une strie/largeur d'un creux est par exemple voisin de 1/10 ce qui permet d'éviter cet effet ventouse tout en offrant un portage suffisant pour l'objet 7.

La longueur L1 du plateau doit permettre un glissement de l'objet sur le plateau de telle sorte que son bord inférieur arrive en bas du plateau quand le plateau arrive en butée en position inclinée.

Le point d'injection des objets postaux hétérogènes 7 dans le carrousel 2 se situe donc au niveau du carrousel à plateaux 6M tandis que le point d'injection des articles de courrier plats homogènes dans le carrousel 2 se situe à un autre endroit différent, ici par exemple à l'extrémité 50 de l'antenne d'alimentation 5.

Comme cela apparaît sur la figure 4, le point d'injection des objets postaux hétérogènes dans le convoyeur à godets 2 se situe plus particulièrement sur une portion de trajet rectiligne du convoyeur à plateaux 6M qui est au-dessus d'une portion de trajet rectiligne du convoyeur à godets 2. Au niveau du point d'injection, les godets 20 circulent dans le même sens que celui des plateaux 6P.

Sur la figure 4, on a illustré des godets 20 avec chacun trois compartiments de chargement adjacents suivant la direction de circulation 21. Chaque compartiment peut être dimensionné pour transporter un article de courrier homogène ou un objet postal hétérogène.

On pourrait prévoir pour chaque godet 20 un compartiment spécifique pour les articles de courrier plats homogènes et un compartiment spécifique pour les objets postaux hétérogènes.

On pourrait aussi prévoir des godets 20 dans lesquels ces compartiments spécifiques seraient juxtaposés (disposés côte à côte perpendiculairement à la direction 21) sans sortir du cadre de l'invention.

A titre d'exemple, la synchronisation entre le carrousel à plateaux 6M de l'antenne spécifique 6 peut être réglée avec le débit du carrousel à godets 2 pour avoir un objet postal hétérogène 7 à injecter tous les six godets consécutifs 20 du carrousel 2.

## Revendications

1. Dispositif d'alimentation en articles plats pour un carrousel à godets avec des godets qui circulent en boucle dans un certain sens de circulation, comprenant :
un convoyeur à plat (6L) dans lequel les articles sont déplacés en série à plat et un carrousel à plateaux (6M) avec des plateaux basculants (6P) aptes à basculer chacun entre une position horizontale et une position inclinée et qui circulent en boucle de façon synchronisée avec les godets du convoyeur à godets et dans le même sens de circulation,
le convoyeur à plat (6L) comportant une extrémité libre en pente qui est en surplomb du carrousel à plateaux pour charger les plateaux en position horizontale du carrousel avec des articles arrivant de l'extrémité libre du convoyeur à plat (6L),
les plateaux basculants (6P) ayant chacun un axe de basculement (6Q) orienté transversalement à la boucle de circulation des plateaux, l'axe de basculement de chaque plateau étant disposé à l'avant du plateau selon le sens de circulation des plateaux de sorte qu'en position inclinée, chaque plateau a un côté arrière suivant le sens de circulation qui s'aligne avec la paroi intérieure d'un godet du carrousel à godets,
les godets (20) du carrousel à godets ayant chacun une grande dimension correspondant à une grande longueur des articles plats qui est orientée transversalement à la boucle de circulation des godets de sorte que dans une portion rectiligne de circulation des plateaux du convoyeur à plateaux qui se superpose à une portion rectiligne de circulation des godets du convoyeur à godets, chaque article chargé sur un plateau étant injecté dans un godet par gravité et simple glissement sur le plateau qui se trouve incliné vers l'intérieur du godet.

2. Dispositif selon la revendication 1, **caractérisé en ce que** l'axe de basculement (6Q) de chaque plateau est disposé à une distance (L2) par rapport à l'avant du plateau suivant le sens de circulation qui est comprise entre 1/5 et 1/3 de la longueur (L1) du plateau suivant ce sens de circulation, et de préférence égale à 1/4 de la longueur du plateau.

3. Dispositif selon la revendication 1, **caractérisé en ce que** chaque plateau (6P) a une face supérieure sur laquelle est chargé un article qui est striée.

4. Dispositif selon la revendication 1, **caractérisé en ce que** l'écart angulaire (A) entre la position horizontale et la position inclinée d'un plateau est d'environ 60°.

5. Machine de tri postal, **caractérisée en ce qu'**elle comporte un dispositif d'alimentation en articles de courrier plats (6) selon l'une des revendications 1 à 4 et des sorties de tri (3) sous le convoyeur à godets.

## Patentansprüche

1. Zuführvorrichtung von flachen Artikeln in umlaufende Aufnahmebehälter mit Aufnahmebehältern, die in einer Schleife in einer bestimmten Umlaufrichtung umlaufen, umfassend
einen Flachförderer (6L), in dem die Artikel in Reihe flach bewegt werden, und ein Plattenkarussell (6M) mit Kippplatten (6P), die geeignet sind, jeweils zwischen einer horizontalen Position und einer geneigten Position zu kippen und die in einer Schleife synchron mit den Aufnahmebehältern des Förderers mit Aufnahmebehältern und in der gleichen Umlaufrichtung umlaufen,
wobei der Flachförderer (6L) ein abfallendes freies Ende aufweist, das über das Plattenkarussell hinaussteht, um die Platten des Karussells in horizontaler Position mit Artikeln zu beladen, die von dem freien Ende des Flachförderers (6L) ankommen,
wobei die Kippplatten (6P) jeweils eine Kippachse (6Q) aufweisen, die quer zu der Umlaufschleife der Platten ausgerichtet ist, wobei die Kippachse von jeder Platte an der Vorderseite der Platte in der Umlaufrichtung der Platten derart angeordnet ist, dass jede Platte in geneigter Position in der Umlaufrichtung eine Rückseite aufweist, die mit der Innenwand eines Aufnahmebehälters der umlaufenden Aufnahmebehälter ausgerichtet ist,
wobei die Aufnahmebehälter (20) der umlaufenden Aufnahmebehälter jeweils eine große Abmessung aufweisen, die einer großen Länge der flachen Artikel entspricht, die quer zu der Umlaufschleife der Aufnahmebehälter derart ausgerichtet ist, dass in einem geradlinigen Abschnitt des Umlaufs der Platten des Plattenförderers, der einen geradlinigen Abschnitt des Umlaufs der Aufnahmebehälter des Förderers mit Aufnahmebehältern überlagert, jeder Artikel, der auf einer Platte geladen ist, durch Schwerkraft und einfaches Gleiten auf der Platte, die in Richtung der Innenseite des Aufnahmebehälters geneigt ist, in eine Aufnahmeschale gestoßen wird.

2. Vorrichtung nach Anspruch 1, **dadurch gekennzeichnet, dass** die Kippachse (6Q) von jeder Platte in einem Abstand (L2) in Bezug auf die Vorderseite der Platte in der Umlaufrichtung angeordnet ist, der zwischen 1/5 und 1/3 der Länge (L1) der Platte in dieser Umlaufrichtung liegt und vorzugsweise gleich 1/4 der Länge der Platte beträgt.

3. Vorrichtung nach Anspruch 1, **dadurch gekennzeichnet, dass** jede Platte (6P) eine Oberseite aufweist, auf der ein Artikel geladen wird, die gestreift ist.

4. Vorrichtung nach Anspruch 1, **dadurch gekennzeichnet, dass** die Winkelabweichung (A) zwischen der horizontalen Position und der geneigten Position einer Platte etwa 60° beträgt.

5. Postsortiermaschine, **dadurch gekennzeichnet, dass** sie eine Zuführvorrichtung von flachen Postartikeln (6) nach einem der Ansprüche 1 bis 4 und Sortierausgänge (3) unter dem Förderer mit Aufnahmebehältern aufweist.

## Claims

1. Flat article feed apparatus for feeding flat articles to a bin carrousel having bins that circulate around a loop in a certain direction, said apparatus being **characterized in that** it comprises:
• a flat conveyor (6L) in which the articles are moved in series and as laid flat, and a platform carrousel (6M) having tipper platforms (6P) each of which is suitable for tilting between a horizontal position and an inclined position and that circulate around a loop in such a manner as to be synchronized with the bins of the bin conveyor and in the same direction;
• **in that** the flat conveyor (6L) has a sloping free end that is vertically above the platform carrousel for the purpose of loading the platforms with articles coming from the free end of the flat conveyor (6L) when the platforms are in the horizontal position;
• **in that** each of the tipper platforms (6P) has a tilt axis (6Q) that extends transversely to the loop around which the platforms circulate, the tilt axis of each platform being disposed at the front of the platform in the direction in which the platforms circulate so that, in the inclined position, each platform has a rear side in the circulation direction that is aligned with the inside wall of a bin of the bin carrousel;
• and **in that** each of the bins (20) of the bin carrousel has a long dimension corresponding to a long dimension of the flat articles that extends transversely to the loop around which the bins circulate so that, in a rectilinear portion along which the platforms circulate on the platform conveyor and which is superposed on a rectilinear portion along which the bins circulate on the bin conveyor, each article loaded on a platform is injected into a bin by gravity and merely by sliding on the platform that is inclined towards the inside of the bin.

2. Apparatus according to claim 1, **characterized in that** the tilt axis (6Q) of each platform is disposed at a distance (L2) relative to the front of the platform in the circulation direction that lies in the range 1/5 of the length (L1) of the platform in said circulation direction to 1/3 of said length (L1), and that is preferably equal to 1/4 of the length of the platform.

3. Apparatus according to claim 1, **characterized in that** each platform (6P) has a top face onto which an article is loaded and that is striated.

4. Apparatus according to claim 1, **characterized in that** the angular difference (A) between the horizontal position of a platform and the inclined position of said platform is about 60°.

5. A postal sorting machine, **characterized in that** it includes feed apparatus for flat mailpieces (6) according to any one of claims 1 to 4, and sorting outlets (3) under the bin conveyor.
